# EUROPEAN PATENT APPLICATION

(11) **EP 2 575 123 A1**
(43) Date of publication of application: **03.04.2013**
(21) Application number: 12160891.3
(22) Date of filing: 22.03.2012
(51) Int. Cl.: G09B 7/00, G06Q 10/00, G09B 7/02, G06Q 10/10

(54) **Customized question paper generation**

(30) Priority: 30.09.2011 IN MU28112011
(71) Applicant: Tata Consultancy Services Limited, 400021 Mumbay (IN)
(72) Inventor: Shah, Viral Prakash, Mumbai (IN); Shaik, Nawaz, Mumbai (IN); Kumar, Rohil, Mumbai (IN)
(74) Representative: Regimbeau

(57) **Abstract**

The present subject matter relates to a method for customized question paper generation. The method includes assigning at least one key value to each of a plurality of questions, and storing the questions along with the at least one associated key value in a question bank. The method further includes fetching the stored questions based on rules in a question paper template, where the rules are based on the at least one key value. Furthermore, the method includes validating the fetched questions based on at least one constraint and generating the question paper based on the validating.

## Description

### TECHNICAL FIELD

The present subject matter is related, in general to content generation and, particularly but not exclusively, to a method and system to generate a customized question paper.

### BACKGROUND

Developments in the field of information technology have resulted in production of fast, secure and reliable computing and communication systems. The computing systems have been used as content generation systems to generate content which may be used for imparting education to an end user. Alternatively, the content generation systems may also be used to develop assessment tests to measure the knowledge level, expertise, and skill of an end user.

These automated content generation systems have proven to be advantageous over conventional methods of manually generating assessment tests, in that the automated content generation systems are less error prone, and offer faster processing capabilities. Moreover, with the increasing number of educational institutions and assessment tests, the demand for automated and dynamic content generation systems is ever increasing.

### SUMMARY

This summary is provided to introduce concepts related to content generation based on rules, and the concepts are further described below in the detailed description. This summary is not intended to identify essential features of the claimed subject matter nor is it intended for use in determining or limiting the scope of the claimed subject matter.

In one implementation, a method to generate a customized question paper is described. In one implementation, the method includes assigning at least one key value to each of a plurality of questions, and storing the questions along with the at least one associated key value in a question bank. The method further includes fetching the stored questions based on rules in a question paper template, where the rules are based on the at least one key value. Furthermore, the method includes validating the fetched questions based on at least one constraint and generating the question paper based on the validation.

### BRIEF DESCRIPTION OF THE DRAWINGS

The present subject matter and other features and advantages thereof will become apparent and may be better understood from the following drawings. The components of the figures are not necessarily to scales, emphasis instead being placed on better illustration of the underlying principle of the subject matter. Different numeral references on figures designate corresponding elements throughout different views. In the figure(s), the left-most digit(s) of a reference number identifies the figure in which the reference number first appears. The same numbers are used throughout the drawings to reference like features and components. The detailed description is described with reference to the accompanying figure(s).

Fig. 1 illustrates a network environment implementing a customized question paper generation system, in accordance with an implementation of the present subject matter.

Fig. 2 illustrates a computing system for customized question paper generation, in accordance with an implementation of the present subject matter.

Fig. 3 illustrates a method for generating a customized question paper in accordance with an implementation of the present subject matter.

### DETAILED DESCRIPTION

Systems and methods for generating a customized question paper are described herein. The systems and methods can be implemented in a variety of computing devices, such as, laptops, desktops, workstations, tablet-PCs, smart phones, notebooks or portable computers, tablet computers, mainframe computers, mobile computing devices, entertainment devices, computing platforms, internet appliances and similar systems. However, a person skilled in the art will comprehend that the embodiments of the present subject matter are not limited to any particular computing system, architecture or application device, as it may be adapted to take advantage of new computing system and platform as they become accessible.

Examinations are important activities organized by educational institutions to evaluate student performance. Generally, for standardized tests and examinations, questions are accumulated over a period of time and stored in a question bank. The question papers are then generated, for example, by an instructor, by manually compiling a question paper template and populating said template with questions selected from a question bank. One or more templates for a particular examination may be created, printed and eventually distributed at the time of the examination. Usually, the instructors maintain their own question bank in some form to help them prepare question papers for future examinations. Current technologies help the instructors to store the questions in computer databases. The issue arises as to how the current technologies could also help the instructors to automatically generate different sets of questions from time to time without concern for repetition and/or duplication of questions in the question paper while the question bank grows. Due to the ever increasing demand for dynamic teaching methodologies and the increasing number of students taking examinations, automated systems for generating question papers are conventionally used.

Conventional automated systems rely on fetching questions from question banks based on one or more fixed criteria. The questions may be initially classified based on their category, such as number of marks and a chapter of study. The questions are then selected based on these fixed criteria and compiled to form a question paper. Some conventional systems provide different question papers for a similar or same event in order to introduce a fair evaluation process. The unique question papers are generated using a randomization technique, such as a shuffling algorithm. It is desired to bring about a dynamic and adaptable question paper generation system, which can cater to the ever growing education industry in order to provide suitable question papers for a variety of examinations.

The present subject matter describes systems and methods for generating a customized question paper. In one implementation, one or more keys and associated key value pairs can be associated with a plurality of questions and stored in a question bank or data repository. The questions thus stored may be accumulated from various sources, such as educational institutions, researchers, and academicians. The key values are used to categorize each of the questions such that the questions are easily selected during generation of the question paper.

In one implementation, a key value pair may be understood as a parameter that is indicative of a characteristic or property of a question. In one example, the key values are selected from a group consisting of a chapter, topology, topic, subject, difficulty, class, section, and term. The key values associated with a set of questions are flexible, that is, the end user can select from among a set of predefined key values or create a set of key values that can be associated with one or more of the questions. Each of the key values is explained at a later stage in the description.

In one implementation, a question paper template may be created by a user, for example, a developer or system administrator. The question paper template may be created during an implementation stage and stored in the system. In said implementation, the question paper templates stored thus may be readily accessed by the end user of the system to generate a question paper. In another example, the question paper template may be created by an end user, such as an instructor of an educational institution or a board of education.

In one example, the question paper template may include static text portions and dynamic text portions. In an example, the static text portions are those portions of the question paper that contain fixed text, such as, exam paper instructions and other such standard text portions of a question paper. The dynamic text portions may be the text portions that change with each question paper, such as the questions. The dynamic text portions include rules to fetch the questions from the question bank based on the one or more key values associated with each of the questions.

In one implementation, the rules may be defined by the user to include one or a combination of the key values in order to identify and fetch the questions from the question bank. The questions thus fetched from the question bank are used to populate the dynamic text portions in the question paper template. In one example, the rule relates to a dynamic search query, which utilizes the key values in a search string to map onto a corresponding key value associated with a question in the question bank.

Moreover, in an implementation, based on one or more constraints, the fetched questions are validated and filtered. In an example, the constraint may include a uniqueness factor, a weighing factor, or a combination of both. For example, the user may specify a requirement for each of the questions populated in the question paper template to be from a different chapter from the syllabus. Therefore, by specifying the chapter to be the uniqueness factor, the constraint may be applied and a best fit may be facilitated for selecting questions in the question paper. In another example, the user may specify a weight distribution for the question paper. In said example, the user may specify a percentage distribution of questions, such as easy questions - 30 %, medium questions - 50 %, and hard questions - 20 %. Therefore, by applying this weighing factor constraint, the questions are distributed as per the specified constraint.

Furthermore, once the question paper is validated against said constraints, a final version of the question paper is generated. In one example the system may be configured to provide the final version of the question paper over a network, such as in the form of email. In another example, the question paper may be printed and hard copies may be sent to the user.

In one implementation, the system may be configured to provide a web based interface, such as a webpage, where the question paper may be accessed over the network via client devices. In an example, the client device, such as a laptop, or a mobile communication device, may be provided through a suitable user interface in order to interact with the webpage to access the question paper. Furthermore, the user, such as a student in one example, may provide answers to the question paper through the mobile communication device.

These and other advantages of the present subject matter would be described in greater detail in conjunction with the following figures. While aspects of described systems and methods for the generation of the customized question paper can be implemented in any number of different computing systems, environments, and/or configurations, the embodiments are described in the context of the following exemplary system(s).

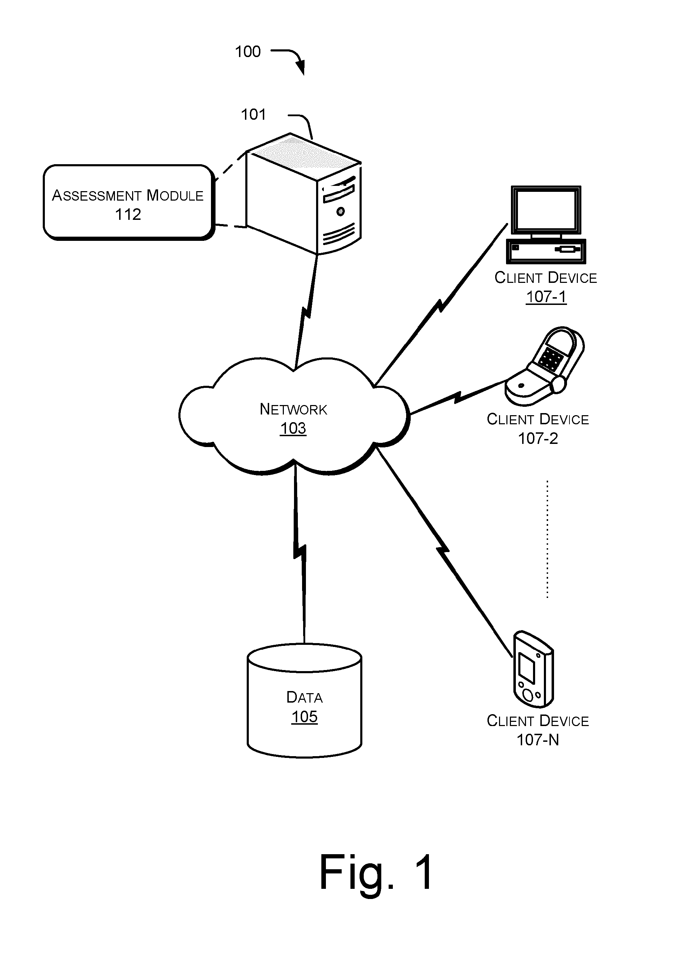

Fig. 1 illustrates a network environment 100 implementing a system for customized question paper generation, according to an implementation of the present subject matter. Hereinafter, the system for customized question paper generation may be referred to as a customized question paper generation system 101. In the network environment 100, the customized question paper generation system 101 is connected to a network 103. Furthermore, data 105, and one or more client devices 107-1, 107-2...107-N, collectively referred to as client devices 107, are also connected to the network 103.

The customized question paper generation system 101 can be implemented as any computing device connected to the network 103. For instance, the customized question paper generation system 101 may be implemented as mainframe computers, workstations, personal computers, desktop computers, multiprocessor systems, laptops, network computers, minicomputers, servers and the like. In addition, the customized question paper generation system 101 may include multiple servers to perform mirrored tasks for users, thereby relieving congestion or minimizing traffic.

Furthermore, the customized question paper generation system 101 is connected to the client devices 107 through the network 103. Examples of the client devices 107 include, but are not limited to personal computers, desktop computers, smart phones, PDAs, and laptops. Communication links between the client devices 107 and the customized question paper generation system 101 are enabled through a desired form of connections, for example, via dial-up modem connections, cable links, digital subscriber lines (DSL), wireless or satellite links, or any other suitable form of communication.

Moreover, the network 103 may be a wireless network, a wired network, or a combination thereof. The network 103 can also be an individual network or a collection of many such individual networks interconnected with each other and functioning as a single large network, e.g., the internet or an intranet. The network 103 can be implemented as one of the different types of networks, such as intranet, local area network (LAN), wide area network (WAN), the internet and such. The network 103 may either be a dedicated network or a shared network, which represents an association of the different types of networks that use a variety of protocols, for example, Hypertext Transfer Protocol (HTTP), Transmission Control Protocol/Internet Protocol (TCP/IP), etc., to communicate with each other. Further, the network 103 may include network devices, such as network switches, hubs, routers, host bus adapters (HBAs), for providing a link between the customized question paper generation system 101 and the client devices 107. The network devices within the network 103 may interact with the customized question paper generation system 101 and the client devices 107 through communication links.

In one implementation, the customized question paper generation system 101 includes an assessment module 112. In one implementation, to fetch questions from a question bank (not shown), the assessment module 112 assesses rules that may be specified by a user

The question bank may be an externally hosted data repository such as data 105, or may be stored within the customized question paper generation system 101. In one example, the user may utilize the client device 107 to specify the rules to fetch the questions to the customized question paper generation system 101 via the network 103. In one implementation, the user may upload a question paper template via the network 103. For example, the question paper template may include rules to fetch the questions from the question bank. The questions thus fetched may be used to populate the question paper template to generate the question paper.

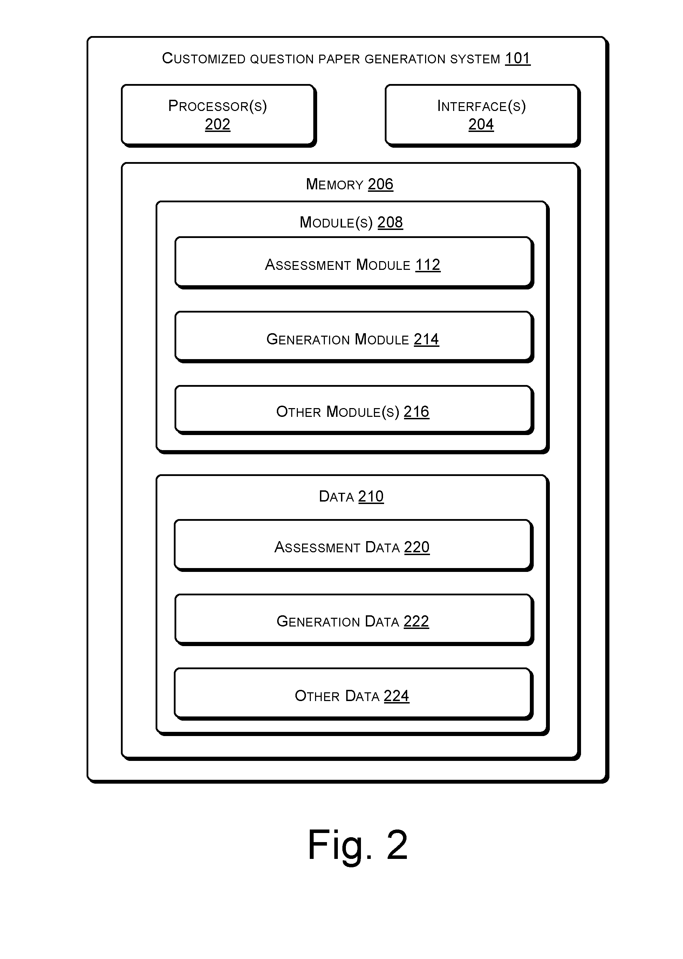

In one implementation, the assessment module 112 may be configured to fetch the questions from the question bank, such as a data repository, to generate a question paper in accordance with the rules. Further, the assessment module 112 may be configured to validate said question paper against one or more constraints or constraint factors. On said validation, the customized question paper generation system 101 generates the question paper, which may be then forwarded to the user. In one example, the question paper may be provided to the user via the client devices 107. In another example, the question paper may be printed and hard copies may be provided to the user(s). As will be appreciated, the question paper thus generated would be customized based on the rules specified by the user, making it easier for the user to associate with the context of the question paper. This would lead to personalized question papers for an effective assessment of a student's skill and knowledge development. The manner in which the customized question paper generation system 101 generates said question papers are further described in conjunction with fig. 2.

Fig. 2 illustrates the customized question paper generation system 101, in accordance with an implementation of the present subj ect matter. In said implementation, the customized question paper generation system 101 includes one or more processor(s) 202, interface(s) 204, and a memory 206 coupled to the processor 202. The processor 202 can be a single processing unit or a number of units, all of which could also include multiple computing units. The processor 202 may be implemented as one or more microprocessors, microcomputers, microcontrollers, digital signal processors, central processing units, state machines, logic circuitries, and/or any devices that manipulate signals based on operational instructions. Among other capabilities, the processor 202 is configured to fetch and execute computer-readable instructions and data stored in the memory 206.

The interfaces 204 may include a variety of software and hardware interfaces, for example, interface for peripheral device(s), such as a keyboard, a mouse, an external memory, and a printer. Further, the interfaces 204 may enable the computing system 100 to communicate with other computing devices, such as web servers and external data repositories in the communication network (not shown in the figure). The interfaces 204 may facilitate multiple communications within a wide variety of protocols and networks, such as a network, including wired networks, e.g., LAN, cable, etc., and wireless networks, e.g., WLAN, cellular, satellite, etc. The interfaces 204 may include one or more ports for connecting the customized question generation system 101 to a number of computing devices.

The memory 206 may include any computer-readable medium known in the art including, for example, volatile memory such as static random access memory (SRAM) and dynamic random access memory (DRAM), and/or non-volatile memory, such as read only memory (ROM), erasable programmable ROM, flash memories, hard disks, optical disks, and magnetic tapes. The memory 206 also includes module(s) 208 and data 210.

The module(s) 208 include routines, programs, objects, components, data structures, etc., which perform particular tasks or implement particular abstract data types. In one implementation, the module(s) 208 includes the assessment module 112, a question paper (QP) generation module 214, hereinafter referred to simply as the generation module 214 for simplicity, and other module(s) 216. The other module(s) 216 may include programs or coded instructions that supplement applications and functions of the customized question paper generation system 101.

On the other hand, the data 210, inter alia serves as a repository for storing data processed, received, and generated by one or more of the module(s) 208. The data 210 includes for example, assessment data 220, generation data 222, and other data 224. The other data 224 includes data generated as a result of the execution of one or more modules in the module(s) 208. Furthermore, in one implementation, the data 105 may be included in the data 210.

In one implementation, the customized question paper generation system 101 generates a question paper based on inputs from a user. In one example, the inputs may be in the form of one or more rules included in a question paper template (described at a later stage), the rules being specified by the user based on a desired structure of the question paper. For readability purposes, the one or more rules are simply referred to as the rules hereinafter. In one implementation, the assessment module 112 assigns at least one key value pair to a question, which may be uploaded to a data repository, such as a question bank. Several such questions may be assigned with one or more of the key value pairs in order to categorize the question in the question bank. The user may create one or more key value pairs in order to categorize a question before uploading it to the question bank. In an example, the user may specify 3 key value pairs to be assigned by the assessment module 112 to a question. The question may be categorized based on one or more keys, such as, chapter, topology, topic, subject, difficulty, class, section, and term. A key value may be assigned correspondingly to the key in the following manner:

Key 1 = chapter, value. The key value here may be a chapter number that is selected based on the chapter from which the question originates, such as, chapter 1, chapter 2, chapter 3, and so forth. Key 2 = topology, value. The key value here may be selected as a topology of the question, such as, poem, reading, writing, and so forth. Key 3 = subject, value. The key value here may be a subject ID that is selected based on the subject of the question, such as, English, History, Math, and so forth. In this manner, the key values may be utilized to categorize the question. In one implementation, the key values determined in the manner described above, are stored in the assessment data 220.

Furthermore, once the questions have been assigned one or more of the key value pairs and stored in the question bank, the user may create the question paper template. In an example, the assessment module 112 is configured to receive the question paper template from the user for further processing. In one example, the user can send the question paper template via the network 103 from any of the client devices 107.

In another example, a group of educational institutions and/or subject experts, such as researchers and academicians may compile the question bank. In one implementation, the educational institutions and/or the subject experts may also create the question paper template. In an example, these question paper templates may be stored in the data 210 and used at a later stage at the time of the generation of the question paper. In another example, the question paper template may be created at a time of examination, in order to increase security of the examination process. For example, the question paper template may be submitted to the customized question paper generation system 101 on the day of the examination, where the assessment module 112 can be configured to receive said question paper template. Subsequently, the question paper template may be generated based on the same and the question paper may be downloaded and printed from the customized question paper generation system 101.

Furthermore, based on the question paper template, the customized question paper generation system 101 can initiate further processing as described below.

In one example, the question paper template may be a document consisting of static text portions and dynamic text portions. The static text portions, for example, may refer to portions of text that remain fixed through various question paper templates. The static text portions may be standard instructions, statistics such as page numbers, examination codes, etc. The dynamic text portions may be the text portions of the question paper template, namely the questions, which are to be populated based on rules.

In one implementation, the rules may be specified by the user based on the key values as described earlier. In an example, the rules may be in the form of a dynamic search query. The search query may be mapped to corresponding key values that were initially mapped to question. In an example, initially, the different key values may be defined in a manner as described earlier. Subsequently the rule may be saved in terms of Boolean operators and brackets, such as:

Rule 1: Fetch 1 question(s) where (chapter = chapter, 15 or chapter = chapter, 2), and topology = topology, writing and subject = subject, history. In other words, this rule specifies that the question that will be fetched from the question bank is from the subject of history, from chapter 1 or chapter 2, and a writing style question.

Similarly, rule 2 may be 'fetch 1 question(s) where (chapter = chapter, 1 or chapter, 2 or chapter, 3), and topology = topology, reading, and subject = subject, English, and marks = marks, 5. Therefore this rule specifies that the question will be a reading style question from chapter 1, 2 or 3, and for 5 marks.

Similarly, various combinations of rules may be defined by the user, using one or more of the key values separated by Boolean separators and brackets. The brackets may be provided to define an order of operation of the rule. For example, a rule may be defined as (chapter = chapter, 1 or chapter = chapter, 2) and subject = subject, history). In a further example, a rule may be defined as (chapter = chapter, 1 or chapter = chapter, 2) and (subject = subject, history or subject = subject, math). In one example, the rules may be provided in the question paper template in the dynamic text portions in order to fetch and populate questions from the question bank therein. Furthermore, in an implementation, the rules created in the manner described above may be stored in the assessment data 220.

In one implementation, in case any of the rules fails, such as, the rule is insufficient or erroneous in any manner, the assessment module 112 may be configured to interrupt the execution of the rules and provide an error message notifying the user of the failure. In such an event, the user may edit the rule accordingly to address the failure.

Furthermore, in one implementation, the customized question paper generation system 101 may include templates of question papers. These question paper templates may be created based on popular question papers such as board exam question papers and other standardized tests. In said example, the user may specify which of the templates he wishes to utilize for a particular examination and make changes if he feels necessary before the question paper is generated. In said example, the assessment module 112 is configured to utilize the selected question paper template in order to generate the question paper.

In one implementation, the user may define one or more constraints in order to filter the questions, or provide a best fit of the questions populated in the question paper template. In one implementation, the assessment module 112 is configured to validate the populated questions based on said constraints. In one implementation, the constraints may be a uniqueness factor, or a weighing factor, or a combination of both.

Consider the following example, where rules, based on which a history question paper for a class 10 examination, may be provided:

Rule 1: Fetch 2 question(s) where Key 1 = chapter, 1, or chapter, 2 and Key 2 = topology, writing and Key 3 = subject, history and Key 4 = marks, 3
Rule 2: Fetch 2 question(s) where Key 1 = chapter, 1, or chapter, 2 and Key 2 = topology, reading and Key 3 = subject, history and Key 4 = marks, 10
Rule 3: Fetch 1 question(s) where Key 1 = chapter, 3 and Key 2 = topology, short answer and Key 3 = subject, history and Key 4 = marks, 5.

Here the rule 1 defines that two questions are to be fetched from the question bank, where the questions relate to the subject 'history', from chapter 1, or 2, the questions will be a writing style question, and the questions may carry a weight of 3 marks each. Rule 2 provides a definition similar to rule 1, except that the question is a reading style question, and will be of 10 marks each. Furthermore, the rule 3 defines the question similar to the rules 1 and 2, except that only one 5 mark short answer style question will be fetched from chapter 3. In the above example, the user may define a uniqueness factor to be Key 1, or 'chapter'. In such a case, the assessment module 112 ensures that the value of 'chapter' will be unique for all the questions fetched from running the above three rules. The assessment module 112 in the above example may be configured to ensure that if the question fetched in rule 1 is from chapter 2, then in rule 2 and rule 3, the assessment module 112 will not fetch a question from chapter 2 again.

In a further example, rules may be provided as follows:

Rule 1: Fetch 1 question(s) where (chapter = chapter, 1, or chapter, 2), and topology = topology, writing and subject = subject, history and marks = marks, 3
Rule 2: Fetch 1 question(s) where (chapter = chapter, 1, or chapter, 2), and topology = topology, reading and subject = subject, history and marks = marks, 10
Rule 3: Fetch 1 question(s) where (chapter = chapter, 1, or chapter, 2) and topology = topology, short answer and subject= subject, history and marks = marks, 5.

In this case, there are three rules, i.e., three questions to be fetched. In the above example, if the user again defines the uniqueness factor to be Key 1, or 'chapter' as described earlier, since there are three questions and only two chapters, it is inevitable that at least two of the three questions will contain a question from the same chapter. In such a case, the assessment module 112 can be configured to provide a best fit. The best fit may be considered to be a best suitable option fulfilling the constraints. In one example, in the event cited above, the assessment module 112 can be configured to fetch the questions sequentially from the top. Therefore, question 1 may be fetched from chapter 1, question 2 may be fetched from chapter 2, and question 3 may be fetched from either chapter 1 or 2, based on the least usage of the question. Furthermore, in the event that more than one question meets requirements set out in a rule, the least usage count may be utilized to fetch the question.

In one implementation, data relating to a number of times a particular question has been fetched, i.e. the least usage count may be stored in the assessment data 220.

In another example, the user may define another constraint, such as a weighing factor. The weighing factor may be utilized to enable a best fit for the fetched questions by distributing the fetched questions according to a specified weight distribution. For example, in the above three rules, in addition to the uniqueness factor, the user may define the weighing factor to be based on difficulty as follows:

Easy questions: 30 % and medium questions: 30 % and hard questions: 40 %. In said example, the assessment module 112 can ensure that the fetched questions are best fit to the above weight distribution. Similarly the user may define the weighing factor to be a weight distribution of any of the key values and the assessment module 112 can ensure a best fit for the fetched questions.

In one implementation, the constraints, such as the uniqueness factor and the weighing factor may be stored in the assessment data 220.

In one example, an examination board may provide the rules, based on the various types of examinations to be conducted, to a service provider implementing the customized question paper generation system 101 to provide services, such as providing customized question papers to various educational institutes affiliated to the examination board. The service provider may subsequently run the customized question paper generation system 101 to generate question papers based on the rules provided by the examination board and provide the question papers either to the educational institutes or to the examination board for further distribution to the educational institutes. In the latter case, the examination board may subsequently review and iterate the question paper. Moreover, in their iteration, the examination board may provide feedback in the form of revised constraints, such as the uniqueness factor and the weighing factor. For example, in case the examination board feels that a question paper is substantially tough, they may increase the percentage of medium and easy questions, and/or reduce the percentage of hard questions. The assessment module 112 of the customized question paper generation system 101 may be configured to receive such revised rules and generate a new question paper. In one example, education board personnel may use a client device 107 to provide inputs relating to the revised rules over the network 103. In such a manner, a dynamic and adaptable question paper generation system is provided by the present subject matter.

In one implementation, after the assessment module 112 validates the questions in the question paper template, a final version of the question paper may be generated by the generation module 214. In one example, the generation module 214 may be interfaced with a printing device (not shown) to generate hard copies of the question paper. In another example, the generation module 214 can be configured to transmit the generated question paper to an educational institution over a network and a staff thereof uses a client to print the question paper in order to distribute the question paper at the time of examination to students.

In another embodiment, the generation module 214 can be configured to display an intermediate question paper to the user through a user interface (not shown). The intermediate question paper may be reviewed and any further changes or iterations to the intermediate question paper can be made prior to publishing the final version of the question paper. In said implementation, the rules based on which the intermediate question paper is generated can be stored in the generation data 222.

Furthermore, in one implementation, the customized question paper generation system 101 may be configured to provide a web based interface, such as a webpage, where the question paper may be accessed over the network 103 via the client devices 107. In an example, the client device 107, such as a laptop, or a mobile communication device, may be provided through a suitable user interface in order to interact with the webpage to access the question paper. Furthermore, the user, such as a student in one example, may provide answers to the question paper through the client device 107. In one example, the assessment module 112 can be configured to receive the answers from the mobile communication device. Furthermore, the answers may be stored in the assessment data 220.

In another implementation, the customized question paper generation system 101 can provide a plurality of unique question papers for a single event, such as for an examination. A target group of assessees or students may be mapped to the question paper template based on their profile. The profile may be categorized for example, as an age group of the students, or class of study. Moreover, the assessment module 112 can be configured to fetch the least used question for each of the question papers generated from the question paper template for the examination. As one question is fetched, the least usage count for that question is increased and another question may be fetched for the next question paper. Moreover, the weighing factor constraint may be kept constant for said implementation, so that according to the present subject matter, each of the plurality of question papers, even though unique, will still be at a substantially similar level of difficulty. In this manner, uniformity of assessment may be maintained across the examination.

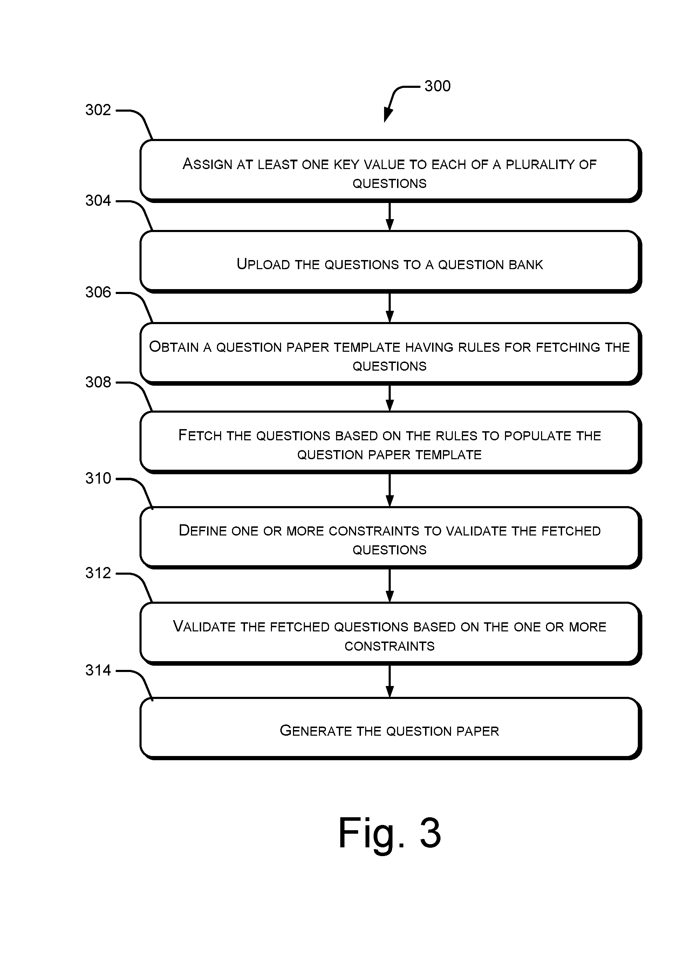

Fig. 3 illustrates a method 300 for customized question paper generation, according to one embodiment of the present subject matter. The method 300 may be implemented in a variety of computing systems, mentioned in description of figs. 1 and 2, in several different ways. For example, the method 300, described herein, may be implemented using the customized question paper generation system 101, as described above.

The method 300, completely or partially, may be described in the general context of computer executable instructions. Generally, computer executable instructions can include routines, programs, objects, components, data structures, procedures, modules, functions, etc., that perform particular functions or implement particular abstract data types. A person skilled in the art will readily recognize that steps of the method can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of the described method 300.

The order in which the method 300 is described is not intended to be construed as a limitation, and any number of the described method blocks can be combined in any order to implement the method, or an alternative method. Additionally, individual blocks may be deleted from the method without departing from the spirit and scope of the subject matter described herein. Furthermore, the methods can be implemented in any suitable hardware, software, firmware, or combination thereof. It will be understood that even though the method 300 is described with reference to the customized question paper generation system 101, the description may be extended to other systems as well.

At block 302, at least one key value pair may be assigned to each of a plurality of questions. The key value pairs can be a value that is indicative of a character or property of a question based on a variety of categories. Examples of key values can be, but are not limited to, chapter, topology, topic, difficulty, marks, class, section, and term. Therefore, the questions may be categorized based on one of more of these key value pairs. In an example, a question may be assigned keys such as Key 1 = chapter, 1, Key 2 = topology, reading, Key 3 = subject, English and Key 4 = marks, 5. This indicates that the question originates from chapter 1, is a reading type question, is from the English subject, and has a weight of 5 marks. In one example, any number of key values may be assigned to a question in order to effectively classify it.

At block 304, the questions along with the associated key values are uploaded onto a data repository such as a question bank. The question bank may be stored on servers, such as web servers and external data servers.

At a block 306, a question paper template is obtained. In one implementation, the question paper template may be received from a user. The question paper template, as described earlier, is a set of rules defining the manner in which each of the questions should be fetched from the question bank. The portions of the question paper template where the questions are populated are referred to as dynamic text portions since they are customizable. In an example, the dynamic text portions may have placeholders or bookmarks, which serve as locations for questions to be populated in the question paper template. In an example, the question paper template may also include static text portions. The static text portions refer to those text portions of a question paper, which contain statutory text. For example, static text can include, but is not limited to, examination instructions, student information forms, examination codes, and procedural instructions. These static text portions may be populated and provided along with the question paper template.

In another implementation, ready-made templates based on popular or standardized test/examination formats may be available in the customized question paper generation system 101, and may be provided to the user for selection. In such a case, the user may select a suitable question paper template based on their requirements. Moreover, any changes to the template are further possible if necessary. The question paper template thus edited by the user, can be obtained at the block 306.

As understood from the foregoing description the question paper template includes rules, based on which questions from the question bank are fetched. In one implementation, the rules may be specified by the user based on the key values as described earlier. In an example, the rules may be in the form of a dynamic search query. The search query may be mapped to corresponding key values that were initially mapped to question. In a further example, the rules may consist of a combination of multiple key value pairs that facilitate the selection of a particular type of question. The rules may be provided in the placeholders or bookmarks of the dynamic text portions of the question paper template. In one example, a placeholder in the dynamic text portion may include a rule such as "Fetch 1 question(s) where Key 1 = chapter, 1 and Key 2 = topology, writing and Key 3 = subject, history. Therefore this rule specified that the question that will be fetched from the question bank is from the subject of history, from chapter 1, and a writing style question.

At a block 308, based on the rules specified in the block 306, the questions may be fetched from the question bank. In such a manner, the question paper template may be populated. Therefore, the question paper template now consists of the static text portions, and the dynamic text portions now populated with questions fetched from the question bank, based on the rules.

At blocks 310 and 312, one or more constraints may be defined in order to validate the fetched questions. In one implementation, the user may define the constraints, such as a uniqueness factor, or a weighing factor, or a combination of various constraints, in a manner as described earlier. The questions as populated in the question paper template thereupon filtered to provide a best fit or best suitable solution for the question paper requirements. For example, for a general knowledge quiz, a uniqueness factor for the key value 'subject' may be defined. Therefore, the questions can be filtered such that each of the populated questions is from a different subject. Similarly, the uniqueness factor may be applied to any of the key values, resulting in that key value being populated only once in the question paper template.

Moreover, the weighing factor may be applied as a constraint for the validation of the question paper template in a manner as described earlier. The user may specify a weight distribution of any of the key values, such that the questions may be populated in that manner. For example, the weighing factor may be provided as 'history questions' = 50 % and 'civics questions' = 50 %. In such a case, the question paper template provided will contain half the questions from questions having a 'history' subject key value, and the other half will contain questions from questions having a 'civics' subject key value. Similarly, weight distribution may be applied as a constraint for any of the key values as described earlier.

At a block 314, a final version of the question paper may be generated. The user may verify and modify the question paper accordingly, such as by changing the constraints. Once finalized, the question paper may be made available for use.

In one implementation, a group of institutions, such as schools, may contribute to accumulating a substantially large question pool. In an example, school teachers across the group of institutions may collaborate to provide examination questions across a plethora of subjects. These questions may methodically be associated with key values and stored in a question bank in a manner as described earlier. Moreover, according to requirements of an education board, such as the Central Board of Secondary Education (CBSE), International Baccalaureate (IB), and the Indian Certificate of Secondary Education (ICSE), the board may provide a question paper template for each of the different subjects for different levels of examinations. Further, according to the present subject matter, rules may be specified to fetch questions in the question paper templates and validated based on the constraints as required. A subsequent review may take place of the question papers generated from this process and finalized question papers may be created and stored for future examinations. By such a method, efforts of thousands of educational institutions may be quantified and used to impart education effectively and ubiquitously. The question banks created thus may be securely stored and maintained over the years as syllabi is revised and amended, and the effort to create question papers may be considerably reduced during examination periods at any class level, or for any subject or board of education.

Although implementations of customized question paper generation have been described in language specific to structural features and/or methods, it is to be understood that the present subject matter is not necessarily limited to the specific features or methods described. Rather, the specific features and methods are disclosed as implementations for customized question paper generation.

## Claims

1. A method for customized question paper generation, the method comprising:
assigning at least one key value to each of a plurality of questions, and storing the questions along with the at least one associated key value in a question bank;
fetching the stored questions based on rules in a question paper template, wherein the rules are based on the at least one key value;
validating the fetched questions based on at least one constraint; and
generating the question paper based on the validating.

2. The method as claimed in claim 1, wherein the at least one key value is associated with at least one of a chapter, topology, topic, difficulty, marks, class, section, and term.

3. The method as claimed in claim 1, wherein the at least one constraint is one or more of a uniqueness factor and a weighing factor.

4. The method as claimed in claim 1 further comprising creating the question paper template, the question paper template having at least one static text portion and at least one dynamic text portion.

5. The method as claimed in claim 1, wherein the validating further comprises providing a best fit for the fetched questions based on the at least one constraint.

6. A customized question paper generation system (101) for generating a customized question paper, the system (101) comprising:
a processor (202); and
a memory (206) coupled to the processor (202), the memory (206) comprising:
an assessment module (112) configured to fetch, based on one or more rules, at least one question from a question bank, and validate the at least one question based on at least one constraint; and
a generation module (214) configured to generate the question paper based on the at least one validated question.

7. The system (101) as claimed in claim 6, wherein the assessment module (112) is further configured to receive a question paper template.

8. The system (101) as claimed in claim 7, wherein the question paper template comprises static text portions and dynamic text portions.

9. The system (101) as claimed in claim 8, wherein the assessment module (112) is further configured to populate the dynamic text portions with at least one question fetched from the question bank.

10. The system (101) as claimed in claim 6, wherein the assessment module (112) is further configured to fetch the at least one question from the question bank based on a least usage of the question.

11. The system (101) as claimed in claim 6, wherein the assessment module (112) is further configured to provide a best fit to the question paper based on the at least one constraint.

12. The system (101) as claimed in claim 6, wherein the assessment module (112) is further configured to provide the question paper to at least one client device (107).

13. The system (101) as claimed in claim 6, wherein the assessment module (112) is further configured to receive answers of the question paper from at least one client device (107).

14. A computer-readable medium having embodied thereon a computer program for executing a method comprising:
assigning at least one key value to each of a plurality of questions, and storing the questions along with the at least one associated key value in a question bank;
fetching the stored questions based on rules provided in a question paper template, wherein the rules are based on the at least one key value;
validating the fetched questions based on at least one constraint; and
generating a question paper based on the validating.
